(19) Europäisches Patentamt
European Patent Office
Office européen des brevets

(11) **EP 4 640 863 A1**

(12) **EUROPEAN PATENT APPLICATION**
published in accordance with Art. 153(4) EPC

(43) Date of publication:
**29.10.2025 Bulletin 2025/44**

(21) Application number: **23906919.8**

(22) Date of filing: **15.12.2023**

(51) International Patent Classification (IPC):
**C22C 38/00** $^{(2006.01)}$      **C21D 8/10** $^{(2006.01)}$
**C22C 38/58** $^{(2006.01)}$

(52) Cooperative Patent Classification (CPC):
**C21D 8/10; C22C 38/00; C22C 38/58**

(86) International application number:
**PCT/JP2023/045030**

(87) International publication number:
**WO 2024/135557 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 JP 2022201836**

(71) Applicant: **NIPPON STEEL CORPORATION**
**Chiyoda-ku**
**Tokyo 100-8071 (JP)**

(72) Inventors:
• **OGAWA, Hiro**
  **Tokyo 100-8071 (JP)**
• **OSUKI, Takahiro**
  **Tokyo 100-8071 (JP)**
• **OTAKI, Nao**
  **Tokyo 100-8071 (JP)**

(74) Representative: **J A Kemp LLP**
**80 Turnmill Street**
**London EC1M 5QU (GB)**

(54) **AUSTENITIC STAINLESS STEEL PIPE AND METHOD FOR MANUFACTURING SAME**

(57)  An austenite-based stainless steel pipe is provided that has large diameter and large wall thickness and that provides high creep strength, good SCC resistance and good SRC resistance. An austenite-based stainless steel pipe has a chemical composition including, in mass %: up to 0.030 % C; 0.10 to 1.00 % Si; 0.10 to 2.00 % Mn; 15.00 to 25.00 % Cr; 6.00 to 15.00 % Ni; 0.020 to 0.200 % N; up to 0.030 % sol. Al; 0.001 to 0.045 % P; up to 0.010 % S; and 0.20 to 1.00 % Nb, the steel pipe having an outer diameter not smaller than 200 mm, a wall thickness not smaller than 15 mm, an austenite crystal grain size of 20 to 300 $\mu$m, and a recrystallization ratio $X$ not lower than 0.90.

*Fig.1*

400μm

EP 4 640 863 A1

**Description**

TECHNICAL FIELD

The present invention relates to an austenite-based stainless steel pipe and a method of manufacturing the same.

BACKGROUND ART

Steel members used in chemical plants, such as heating furnace tubes, are exposed to high-temperature, high-pressure corrosion environments. As such, they are required to have high creep strength and good stress corrosion cracking resistance (hereinafter referred to as "SCC resistance").

KUDO, Takeo et al., "Development of 347AP Stainless Steel with High Polythionic Acid SCC Resistance for Furnace Tubes", Sumitomo Metals, Volume 38 (1986), Issue 3, page 190, discloses an austenite-based stainless steel where C is reduced and appropriate amounts of N and Nb are added to provide good weldability and high-temperature strength and, without post-weld heat treatment, prevent deterioration of SCC resistance in a polythionic acid environment (hereinafter referred to as "polythionic acid SCC resistance") even after a prolonged period of time of aging.

Steel members used in chemical plants are required to have creep strength and SCC resistance and, in addition, stress relaxation cracking resistance (hereinafter referred to as "SRC resistance"). To satisfy these properties, control of crystal grains is important. To improve SRC resistance, finer crystal grains are preferable; however, to provide sufficient creep strength, coarser crystal grains are preferable. Thus, it is necessary to control the size of the crystal grains so as to fall within an appropriate range that satisfies both demands.

PRIOR ART DOCUMENTS

PATENT DOCUMENTS

[Non-Patent Document 1] KUDO, Takeo et al., "Development of 347AP Stainless Steel with High Polythionic Acid SCC Resistance for Furnace Tubes", Sumitomo Metals, Volume 38 (1986), Issue 3, page 190

SUMMARY OF THE INVENTION

PROBLEMS TO BE SOLVED BY THE INVENTION

Equipment of various sizes is used in chemical plants. Accordingly, steel members of various sizes are used depending on the size of the equipment. On the other hand, if a steel pipe with large diameter and large wall thickness is produced using an austenite-based stainless steel containing Nb, good SRC resistance may not be obtained even if the size of crystal grains is in an appropriate range.

A problem to be solved by the present invention is to provide an austenite-based stainless steel pipe with large diameter and large wall thickness that provides high creep strength, good SCC resistance and good SRC resistance.

MEANS FOR SOLVING THE PROBLEMS

An austenite-based stainless steel pipe according to one embodiment of the present invention has a chemical composition of, in mass %: up to 0.030 % C; 0.10 to 1.00 % Si; 0.10 to 2.00 % Mn; 15.00 to 25.00 % Cr; 6.00 to 15.00 % Ni; 0.020 to 0.200 % N; up to 0.030 % sol. Al; 0.001 to 0.045 % P; up to 0.010 % S; 0.20 to 1.00 % Nb; and balance Fe and impurities, an outer diameter being not smaller than 200 mm, a wall thickness being not smaller than 15 mm, an austenite crystal grain size being 20 to 300 $\mu$m, a recrystallization ratio $X$ being not lower than 0.90. The recrystallization ratio $X$ is measured by: taking a sample from a middle portion, as determined along a wall-thickness direction, of the austenite-based stainless steel pipe; conducting an electron backscatter measurement in a grid with a scan spacing not larger than 2.0 $\mu$m, where a region not smaller than 10.0 mm$^2$ of a cut surface perpendicular to a pipe-axis direction is measured; and classifying those of crystal grains within the measured region which have a GOS value not less than 1.0° as non-recrystallized grains and those with a GOS value less than 1.0° as recrystallized grains. The defining angle for a crystal grain boundary is 4.0°. The recrystallization ratio $X$ is defined as the ratio of the area of the recrystallized grains $S_R$ to the area of the measured region $S$, $S_R/S$.

An austenite-based stainless steel pipe according to one embodiment of the present invention has a chemical composition of, in mass %: up to 0.030 % C; 0.10 to 1.00 % Si; 0.10 to 2.00 % Mn; 15.00 to 25.00 % Cr; 6.00 to 15.00 % Ni; 0.020 to 0.200 % N; up to 0.030 % sol. Al; 0.001 to 0.045 % P; up to 0.010 % S; 0.20 to 1.00 % Nb; and balance Fe and impurities, an outer diameter being not smaller than 200 mm, a wall thickness being not smaller than 15 mm, an austenite crystal grain size being 20 to 300 $\mu$m, a recrystallization ratio $X$ being not lower than 0.90. The recrystallization ratio $X$ is measured by: taking a sample from a middle portion, as determined along a wall-thickness direction, of the austenite-based stainless steel pipe; conducting an electron backscatter measurement in a grid with a scan spacing not larger than 2.0 $\mu$m, where a region not smaller than 10.0 mm$^2$ of a cut surface perpendicular to a pipe-axis direction is measured; and classifying those of crystal grains within the measured region which have a GOS value not less than 1.0° as non-recrystallized grains and those with a GOS value less than 1.0° as recrystallized grains. The defining angle for a crystal grain boundary is 4.0°. The recrystallization ratio $X$ is defined as the ratio of the area of the recrystallized grains $S_R$ to the area of the measured region $S$, $S_R/S$.

An austenite-based stainless steel pipe according to one embodiment of the present invention has a chemical composition of, in mass %: up to 0.030 % C; 0.10 to 1.00 % Si; 0.10 to 2.00 % Mn; 15.00 to 25.00 % Cr; 6.00 to 15.00 % Ni; 0.020 to 0.200 % N; up to 0.030 % sol. Al; 0.001 to 0.045 % P; up to 0.010 % S; and 0.20 to 1.00 % Nb, and further containing one or more selected from the group consisting of: up to 2.00 % Mo; up to 2.50 % Cu; and up to 0.0050 % B, and balance Fe and impurities, an outer diameter being not smaller than 200 mm, a wall thickness being not smaller than 15 mm, an austenite crystal grain size being 20 to 300 $\mu$m, a recrystallization ratio $X$ being not lower than 0.90. The recrystallization ratio $X$ is measured by: taking a sample from a middle portion, as determined along a wall-thickness direction, of the austenite-based stainless steel pipe; conducting an electron backscatter measurement in a grid with a scan spacing not larger than 2.0 $\mu$m, where a region not smaller than 10.0 mm$^2$ of a cut surface perpendicular to a pipe-axis direction is measured; and classifying those of crystal grains within the measured region which have a GOS value not less than 1.0° as non-recrystallized grains and those with a GOS value less than 1.0° as recrystallized grains. The defining angle for a crystal grain boundary is 4.0°. The recrystallization ratio $X$ is defined as the ratio of the area of the recrystallized grains $S_R$ to the area of the measured region $S$, $S_R/S$.

A method of manufacturing an austenite-based stainless steel pipe according to one embodiment of the present invention is a method of manufacturing any one of the above-described austenite-based stainless steel pipes, including: piercing a steel material to produce a cup-shaped hollow shell; subjecting the cup-shaped hollow shell to a push-bench process in a plurality of cycles to produce an intermediate product; and heat treating the intermediate product at 1140 to 1190 °C, wherein, in at least one of the plurality of cycles of the push-bench process to produce the intermediate product, the cup-shaped hollow shell is held at a predetermined heating temperature $T1$ for a predetermined period of time and then held at a heating temperature $T2$ lower than the heating temperature $T1$ for a predetermined period of time before the push-bench process.

EFFECTS OF THE INVENTION

The present invention provides an austenite-based stainless steel pipe with large diameter and large wall thickness that provides high creep strength, good SCC resistance and good SRC resistance.

BRIEF DESCRIPTION OF THE DRAWINGS

[FIG. 1] FIG. 1 is a GOS map of a microstructure with a recrystallization ratio $X$ of 0.93.
[FIG. 2] FIG. 2 shows a distribution of GOS-value frequency in the microstructure of FIG. 1.
[FIG. 3] FIG. 3 is a GOS map of a microstructure with a recrystallization ratio $X$ of 0.59.
[FIG. 4] FIG. 4 shows a distribution of GOS-value frequency in the microstructure of FIG. 3.
[FIG. 5] FIG. 5 is a flow chart of an exemplary method of manufacturing an austenite-based stainless steel pipe.
[FIG. 6] FIG. 6 shows an exemplary heat pattern for the heating during the push-bench process.

EMBODIMENTS FOR CARRYING OUT THE INVENTION

The present inventors studied the manufacture of steel pipes with large diameter and thick wall using austenite-based stainless steels containing Nb, and investigated the causes of the occasional failure to obtain good SRC resistance. They found that a steel pipe with poor SRC resistance had a microstructure containing large amounts of non-recrystallized grains with strain still remaining.

Typically, an austenite-based stainless steel pipe is produced by hot working a steel material into a pipe and then subjecting it to a predetermined heat treatment. The hot working introduces strain into the crystal grains. Performing heat treatment after hot working causes recrystallization, thereby relieving the strain that has been introduced during hot working. It is assumed that if the amount of strain introduced during hot working is insufficient, recrystallization may not occur during heat treatment, leaving non-recrystallized grains with strain still remaining.

Typical hot working processes used to form a steel material into a pipe include hot rolling (i.e., Mannesmann process), hot extrusion (i.e., Ugine-Sejournet process), and hollow forging (i.e., Ehrhardt push-bench process). Hollow forging is used to produce a steel pipe with large diameter and thick wall, such as an outer diameter not smaller than 200 mm and a wall thickness not smaller than 15 mm. While hot extrusion applies a relatively large amount of processing such as a reduction in area not smaller than 80 % per extrusion cycle, hollow forging involves a reduction in area per push-bench cycle that is about 30 % at the maximum. Accordingly, it is assumed that a steel pipe with large diameter and thick wall produced by hollow forging is less likely to have processing strain uniform along the wall-thickness direction such that non-recrystallized grains are more likely to remain. Although processing strain can also be introduced by cold working, it is difficult to produce a steel pipe with large diameter and thick wall by performing cold working with high processing after hot working. Further, it is assumed that a steel containing Nb is even less likely to have uniform processing strain, due to Nb segregation.

The present inventors established a method for quantifying the degree to which such non-recrystallized grains remain through crystal orientation analysis using electron backscatter diffraction. Specifically, a crystal grain for which the grain orientation spread (GOS) value, an indicator of variation of orientation within a given crystal grain, is not less than 1.0° is classified as a non-recrystallized grain, while a crystal grain with a GOS value less than 1.0° as a recrystallized grain. Here, the defining angle for a crystal grain boundary is 4.0°. The recrystallization ratio $X$ is defined as the ratio of the area of recrystallized grains $S_R$ to the area of the measured region $S$, $S_R/S$. If the recrystallization ratio X is not lower than 0.90 and the size of crystal grains is within an appropriate range (specifically, an austenite crystal grain size of 20 to 300 $\mu$m), good SRC resistance can be obtained even in a large-diameter, thick-wall steel pipe.

The present inventors also considered how to obtain a proper microstructure when producing a steel pipe by hollow forging. They found that if the heating prior to the push-bench process is performed in two stages and an appropriate heating temperature is used for the heat treatment after the push-bench process, a microstructure can be obtained that has a recrystallization ratio $X$ not lower than 0.90 and an austenite crystal grain size of 20 to 300 $\mu$m.

The present invention was made based on the above-described findings. An austenite-based stainless steel pipe according to one embodiment of the present invention will be described in detail below.

[Chemical Composition]

The austenite-based stainless steel pipe according to the present embodiment has such a chemical composition as described below. In the following description, "%" for the content of an element means mass %.

C: up to 0.030 %

Carbon (C) is inevitably contained in steel. C produces $M_{23}C_6$-type Cr carbides on the grain boundaries, thus decreasing the SCC resistance of the steel. In view of this, C content is to be not higher than 0.030 %. An upper limit of C content is preferably 0.025 %, and more preferably 0.020 %. To provide SCC resistance, it is preferable to reduce C content as much as possible; however, an excessive reduction increases manufacturing costs. A lower limit of C content is preferably 0.001 %, and more preferably 0.003 %.

Si: 0.10 to 1.00 %

Silicon (Si) deoxidizes steel. Si also increases the oxidation resistance and steam oxidation resistance of the steel. On the other hand, if Si content is too high, this produces $\sigma$ phase in the steel, which decreases the creep strength of the steel. In view of this, Si content is to be 0.10 to 1.00 %. A lower limit of Si content is preferably 0.15 %, and more preferably 0.20 %. An upper limit of Si content is preferably 0.80 %, and more preferably 0.60 %.

Mn: 0.10 to 2.00 %

Manganese (Mn) deoxidizes steel. Mn also stabilizes the austenite, thus increasing the creep strength of the steel. On the other hand, if Mn content is too high, this produces $\sigma$ phase in the steel, which decreases the creep strength of the steel. In view of this, Mn content is to be 0.10 to 2.00 %. A lower limit of Mn content is preferably 0.30 %, more preferably 0.50 %, yet more preferably 0.80, and still more preferably 1.00 %. An upper limit of Mn content is preferably 1.80 %, and more preferably 1.60 %.

Cr: 15.00 to 25.00 %

Chromium (Cr) increases the polythionic acid SCC resistance of steel. Cr also increases the oxidation resistance, steam oxidation resistance, and high-temperature corrosion resistance of the steel. On the other hand, if Cr content is too high, this decreases the stability of the austenite, which decreases the creep strength of the steel. In view of this, Cr content is to be 15.00 to 25.00 %. A lower limit of Cr content is preferably 16.00 %, and more preferably 16.50 %. An upper limit of Cr content is preferably 22.00 %, and more preferably 20.00 %.

Ni: 6.00 to 15.00 %

Nickel (Ni) stabilizes austenite and thus increases the creep strength of the steel. On the other hand, if Ni content is excessively increased, saturation is reached in terms of these effects while manufacturing costs increase. In view of this, Ni content is to be 6.00 to 15.00 %. A lower limit of Ni content is preferably 8.00 %, and more preferably 9.50 %. An upper limit of Ni content is preferably 14.00 %, more preferably 13.00 %, and yet more preferably 12.00 %.

N: 0.020 to 0.200 %

Nitrogen (N) dissolves in the matrix and thus stabilizes the austenite, thereby improving the creep strength of the steel. N also forms fine carbonitrides in the grains and thus increases the creep strength of the steel. On the other hand, if N content is too high, this produces Cr nitrides on the grain boundaries; when the steel is welded, the polythionic acid SCC resistance in the weld-heat-affected zones decreases. Further, the hot workability of the steel decreases. In view of this, N content is to be 0.020 to 0.200 %. A lower limit of N content is preferably 0.040 %, and more preferably 0.060 %. An upper limit of N content is preferably 0.150 %, and more preferably 0.100 %.

Sol. Al: up to 0.030 %

Aluminum (Al) may be contained in steel as a deoxidizer. On the other hand, if Al content is too high, this decreases the hot workability of the steel. In view of this, Al content is to be not higher than 0.030 %. To purposefully produce Al's effect of deoxidation, Al content may be not lower than 0.001 %. A lower limit of Al content is more preferably 0.002 %. An upper limit of Al content is preferably 0.025 %, and more preferably 0.020 %. As used herein, Al content means the content of acid-soluble Al (sol. Al).

P: 0.001 to 0.045 %

Phosphorus (P) increases the creep ductility of steel. On the other hand, if P content is too high, this decreases the hot workability and toughness of the steel. A lower limit of P content is preferably 0.005 %, and more preferably 0.010 %. An upper limit of P content is preferably 0.040 %, and more preferably 0.030 %.

S: up to 0.010 %

Sulfur (S) is an impurity. S decreases the hot workability of the steel. In view of this, S content is to be not higher than 0.010 %. An upper limit of S content is preferably 0.008 %, and more preferably 0.006 %. To provide hot workability, it is preferable to reduce S content as much as possible; however, an excessive reduction increases manufacturing costs. A lower limit of S content is preferably 0.0001 %, and more preferably 0.0005 %.

Nb: 0.20 to 1.00 %

Niobium (Nb) produces carbonitrides and thus fixes C, thereby reducing the amount of solute C to increase the polythionic acid SCC resistance of the steel. Nb also precipitates in the form of carbonitrides to increase the creep strength of the steel and, at the same time, contributes to providing finer grain size to improve SRC resistance. On the other hand, if Nb content is too high, this increases the amount of coarse carbonitrides, which form initiation points of fracture, decreasing toughness. A lower limit of Nb content is preferably 0.25 %, and more preferably 0.30 %. An upper limit of Nb content is preferably 0.80 %, more preferably 0.70 %, yet more preferably 0.60 %, and still more preferably 0.50 %.

The balance of the chemical composition of the austenite-based stainless steel pipe according to the present embodiment is Fe and impurities. "Impurity" as used herein means an element originating from ore or scrap used as raw material for steel or an element that has entered from the environment or the like during the manufacturing process.

In the chemical composition of the austenite-based stainless steel pipe according to the present embodiment, some of the Fe contained may be replaced by one or more selected from the group consisting of: up to 2.00 % Mo; up to 2.50 % Cu; and up to 0.0050 % B. While Mo, Cu and B are elements that improve the creep strength of the steel, all of them are optional elements. In other words, the austenite-based stainless steel pipe according to the present embodiment may contain only one or more of Mo, Cu and B, or may contain none of them.

Mo: 0 to 2.00 %

Molybdenum (Mo) increases the creep strength of steel. Mo also prevents production of grain-boundary carbides, and increases the polythionic acid SCC resistance of the steel. These effects are produced if a small amount of Mo is contained. On the other hand, if Mo content is too high, this decreases the stability of the austenite. In view of this, Mo content is to be 0 to 2.00 %. A lower limit of Mo content is preferably 0.05 %, more preferably 0.10 %, and yet more preferably 0.20 %. An upper limit of Mo content is preferably 1.50 %, more preferably 1.00 %, and yet more preferably 0.80 %.

Cu: 0 to 2.50 %

Copper (Cu) precipitates in the form of a fine Cu phase within the grains and thus increases the creep strength of the steel. These effects are produced if a small amount of Cu is content. On the other hand, if Cu content is too high, this decreases the creep ductility of the steel. In view of this, Cu content is to be 0 to 2.50 %. A lower limit of Cu content is preferably 0.05 %, more preferably 0.10 %, and yet more preferably 0.20 %. An upper limit of Cu content is preferably 2.00 %, more preferably 1.80 %, yet more preferably 1.50 %, and still more preferably 1.00 %.

B: 0 to 0.0050 %

Boron (B) segregates on the grain boundaries and thus increases the grain-boundary strength to increase the creep strength and creep ductility of the steel. These effects are produced if a small amount of B is contained. On the other hand, if B content is too high, this decreases the weldability and hot workability of the steel. In view of this, B content is to be 0 to 0.0050 %. A lower limit of B content is preferably 0.0005 %, and more preferably 0.0010 %. An upper limit of B content is preferably 0.0040 %, and more preferably 0.0030 %.

[Microstructure]

The austenite-based stainless steel pipe according to the present embodiment has a microstructure mainly composed of austenite phase. The volume ratio of the austenite phase in the microstructure of the austenite-based stainless steel pipe according to the present embodiment is preferably not lower than 90 %, and more preferably not lower than 95 %.

[Recrystallization Ratio $X$]

The austenite-based stainless steel pipe according to the present embodiment has a recrystallization ratio, $X$, described further below, of not lower than 0.90 %. If recrystallization ratio $X$ is too low, good SRC resistance cannot be provided. Recrystallization ratio $X$ is preferably not lower than 0.94 %, more preferably not lower than 0.96 %, and yet more preferably not lower than 0.98 %.

Recrystallization ratio $X$ is measured in the following manner.

In an austenite-based stainless steel pipe, a sample for microstructure observation is taken from a middle portion as determined along the wall-thickness direction. Electron backscatter diffraction (EBSD) measurement is performed, where a cut surface perpendicular to the pipe-axis direction serves as the surface to be observed. The region being measured is a continuous region with an area not smaller than 10.0 mm$^2$. If the area of the region being measured is small, this will lead to larger variations in the measurement data. Here, measurement may be performed on a plurality of fields of view and the total area may be not smaller than 10.0 mm$^2$. For example, if one field of view has a size of 1000 $\mu$m $\times$ 2000 $\mu$m (2.0 mm$^2$), measurement may be performed on five or more continuous fields of view.

EBSD measurement is performed in a grid with a scan spacing not larger than 2.0 $\mu$m. If the scan spacing is too large, the correct value of recrystallization ratio $X$ may not be obtained. Specifically, it will tend to be lower than the correct value. In contrast, a scan spacing not larger than 2.0 $\mu$m practically eliminates variations in measurement values due to the magnitude of the scan spacing.

The EBSD measurement results are used to determine the crystal grain boundaries. The defining angle for a crystal grain boundary is 4.0°. In other words, a difference in orientation not smaller than 4.0° is treated as indicative of a crystal grain boundary. If the defining angle for a crystal grain boundary (i.e., threshold of the difference in orientation for being treated as indicative of a crystal grain boundary) is set to a large value, a plurality of adjacent crystal grains with smaller differences in orientation than this defining angle will be treated as a single non-recrystallized grain; thus, the calculated value of recrystallization ratio $X$ will be small. On the other hand, if the defining angle for a crystal grain boundary

is set to a small value, even a sub-boundary with a very small force driving recrystallization will be treated as a crystal grain; thus, the calculated value of recrystallization ratio $X$ will be larger. Setting the defining angle to 4.0° will provide the most appropriate recrystallization ratio $X$. This value (4.0°) was determined by creating GOS maps while varying the defining angle for a crystal grain boundary and comparing them with an IQ+IPF map.

The grain orientation spread (GOS) value for each crystal grain is calculated. A GOS value is the average difference in orientation between one measurement point and another measurement point within the same crystal grain. The GOS value is expressed by the equation indicated below, where $\alpha_{i,j}$ is the difference in orientation between measurement point i and measurement point j (in degrees), and $n$ is the number of measurement points within the crystal grain.

[Expression 1]

$$GOS = \frac{\sum_{i,j=1}^{n} \alpha_{i,j(i \neq j)}}{n(n-1)}$$

According to the present embodiment, a crystal grain with a GOS value not less than 1.0° is classified as a non-recrystallized grain, and a crystal grain with a GOS value less than 1.0° as a recrystallized grain. This threshold (i.e., 1.0°) was determined by distributions of GOS-value frequency and by comparing the associated GOS maps with an IQ+IPF map.

The ratio of the area of the recrystallized grains $S_R$ to the area of the measured region $S$, $S_R/S$, is treated as "recrystallization ratio $X$". It will be understood that, if one field of view has a size of 1000 μm × 2000 μm and EBSD measurement is performed for five or more continuous fields of view, as discussed above, the recrystallization ratio $X$ may be determined for each field of view and the average for all the fields of view may be calculated.

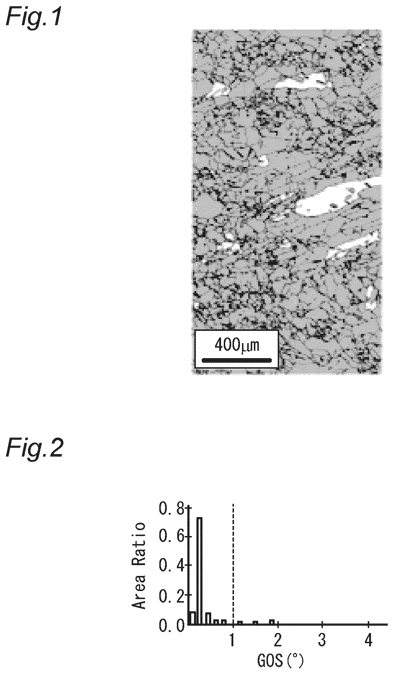

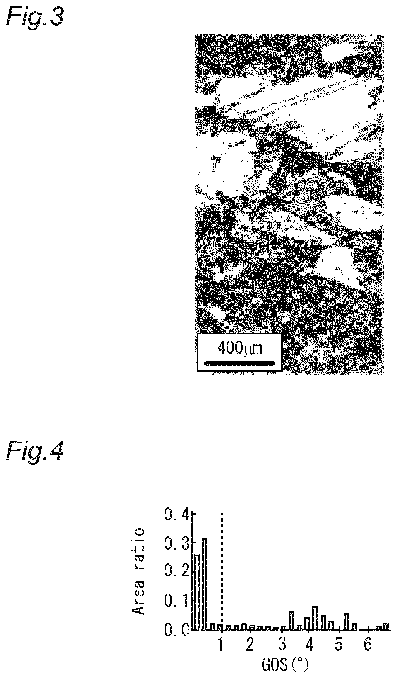

By way of example, FIG. 1 shows a GOS map of a microstructure with a recrystallization ratio $X$ of 0.93, and FIG. 2 shows a distribution of GOS-value frequency in the microstructure of FIG. 1. Similarly, FIG. 3 shows a GOS map of a microstructure with a recrystallization ratio $X$ of 0.59, and FIG. 4 shows a distribution of GOS-value frequency in the microstructure of FIG. 3. In the GOS maps of FIGS. 1 and 3, a portion indicated in gray is a crystal grain with a GOS value less than 1.0° (i.e., crystal grain classified as a recrystallized grain), while a portion indicated in white is a crystal grain with a GOS value not less than 1.0° (i.e., crystal grain classified as a non-recrystallized grain).

[Austenite Crystal Grain Size]

The austenite-based stainless steel pipe according to the present embodiment has an austenite crystal grain size of 20 to 300 μm. Austenite crystal grain size as used here does not mean the size of a crystal grain used to calculate a GOS value from an EBSD measurement, discussed above, but an average crystal grain size calculated based on crystal grain boundaries revealed by typical mixed-acid etching. Specifically, measurement is performed in the following manner.

A sample for microstructure observation is taken from a middle portion, along the wall-thickness direction, of an austenite-based stainless steel pipe. A cut surface perpendicular to the pipe-axis direction is chosen as the surface to be observed, which is mirror polished and then etched using a mixed acid with the ratio of hydrochloric acid and nitric acid of 1:1 to reveal crystal grain boundaries of austenite. The crystal grain size number $G$ is determined based on the intercept method in accordance with JIS G 0551

(2013). The crystal grain size number $G$ is converted to an average grain size $R$ (μm) based on the equations indicated below. This average grain size $R$ is treated as the austenite crystal grain size.

$$n = 2^{G+3}$$

$$R = 1000/n^{1/2}$$

If the austenite crystal grain size is too small, this increases the total area of the crystal grain boundaries, decreasing creep strength. On the other hand, if the austenite crystal grain size is too large, this results in non-uniform precipitates, again decreasing creep strength. A lower limit of austenite crystal grain size is preferably 30 μm, more preferably 50 μm, yet more preferably 60 μm, and still more preferably 70 μm. An upper limit of austenite crystal grain size is preferably 260 μm, more preferably 220 μm, and yet more preferably 180 μm.

[Mechanical Properties and Other Features]

Preferably, the austenite-based stainless steel pipe according to the present embodiment has a tensile strength not lower than 515 MPa at room temperature.

The austenite-based stainless steel pipe according to the present embodiment has an outer diameter not smaller than 200 mm and a wall thickness not smaller than 15 mm.

A lower limit of the outer diameter of the austenite-based stainless steel pipe according to the present embodiment is preferably 300 mm, more preferably 400 mm, and yet more preferably 500 mm. While no particular upper limit is to be specified for the outer diameter of the austenite-based stainless steel pipe according to the present embodiment, an example may be 1000 mm.

A lower limit of the wall thickness of the austenite-based stainless steel pipe according to the present embodiment is preferably 20 mm, more preferably 25 mm, and yet more preferably 30 mm. While no particular upper limit is to be specified for the wall thickness of the austenite-based stainless steel pipe according to the present embodiment, an example may be 100 mm.

The austenite-based stainless steel pipe according to the present embodiment is preferably a seamless steel pipe.

[Manufacturing Method]

An exemplary method of manufacturing the austenite-based stainless steel pipe according to the present embodiment will be described. The manufacturing method described below is merely an illustrative example, and the manufacture of the austenite-based stainless steel pipe according to the present embodiment is not limited to this method.

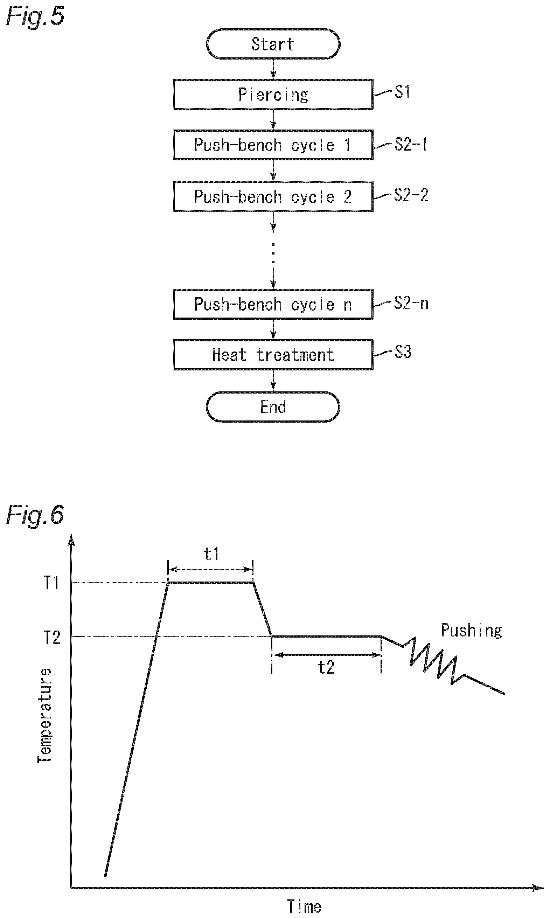

FIG. 5 is a flow chart of an exemplary method of manufacturing an austenite-based stainless steel pipe. This manufacturing method includes a piercing step (step S1), a push-bench step in a plurality of cycles (steps S2-1, S2-2, ..., S2-n), and a heat treatment step (step S3).

An ingot having such a chemical composition as described above is heated to a predetermined temperature and is then pierced by a vertical press to produce a bottomed cylindrical intermediate product (hereinafter referred to as "cup-shaped hollow shell") (piercing step (step S1)). The heating temperature before piercing may be 1200 to 1300 °C, for example.

The cup-shaped hollow shell is heated to a predetermined temperature, and a mandrel is then inserted to push it into a die (push-bench step (substeps S2-1, S2-2, ..., S2-n)). At this point, if the processing applied by one cycle of the push-bench process is too high, the bottom of the cup-shaped hollow shell is broken, making the push-bench process impossible. In view of this, a plurality of cycles of the push-bench process are performed to form the shell into the target size. The reduction in area per push-bench cycle is preferably not higher than 30.0 %.

In this step, a push-bench process including two stages, described below, is performed in at least one of the plurality of cycles (substeps S2-1, S2-2, ... S2-n) of the push-bench step.

FIG. 6 shows an exemplary heat pattern for the heating during the push-bench step. In this heat pattern, the cup-shaped hollow shell is first held at a heating temperature $T1$ for a holding time $t1$, and then held at a heating temperature $T2$ lower than the heating temperature $T1$ for a holding time $t2$, before the push-bench process.

As the cup-shaped hollow shell is heated to a relatively high heating temperature $T1$ before the push-bench process, recrystallization is promoted. On the other hand, holding at the heating temperature $T1$ for a prolonged period of time would coarsen the crystal grains; in view of this, after holding for the holding time $t1$, the heating temperature is lowered to the heating temperature $T2$.

The heating temperature $T1$ may be 1150 to 1250 °C, for example. A lower limit of the heating temperature $T1$ is preferably 1170 °C. An upper limit of the heating temperature is preferably 1220 °C.

The holding time $t1$ may be 60 to 300 minutes, for example. A lower limit of the holding time $t1$ is preferably 80 minutes, and more preferably 120 minutes. An upper limit of the holding time $t1$ is preferably 240 minutes, and more preferably 180 minutes.

The difference between the heating temperatures $T1$ and $T2$, $T1-T2$, is preferably not less than 20 °C, and more preferably not less than 30 °C.

The holding time $t2$ may be 30 to 300 minutes, for example. A lower limit of the holding time $t2$ is preferably 40 minutes, and more preferably 60 minutes. An upper limit of the holding time $t2$ is preferably 240 minutes, and more preferably 180 minutes.

As discussed above, a push-bench process including two stages of heating as described above is only required to be performed in at least one of the plurality of cycles (substeps S2-1, S2-2, ... S2-n) of the push-bench step. In the other cycles of the push-bench step, the cup-shaped hollow shell may be heated to a temperature that enables the push-bench process (e.g., 1150 to 1250 °C) before the push-bench process. Nevertheless, it is assumed that the larger the number of cycles of the push-bench process including the above-described two-stage heating, the higher the recrystallization ratio $X$

becomes. In view of this, during the push-bench step in a plurality of cycles (substeps S2-1, S2-2, ..., S2-n), a push-bench process including two-stage heating as described above is preferably performed in two or more cycles, more preferably in three or more cycles, and yet more preferably in four or more cycles.

The bottom of the cup-shaped hollow shell may be cut and removed after completion of the push-bench step, or may be removed after the heat treatment step (step S3).

The intermediate product after the push-bench step is heat treated (step S3). The heating temperature for the heat treatment is 1140 to 1190 °C. If the heating temperature for the heat treatment is too low, a microstructure with high recrystallization ratio $X$ cannot be obtained. On the other hand, if the heat treatment temperature is too low, the crystal grains will coarsen. A lower limit of the temperature for the heat treatment is preferably 1150 °C. An upper limit of the temperature for the heat treatment is preferably 1180 °C.

The holding time for heat treatment is preferably 15 to 180 minutes. A lower limit of the holding time for heat treatment is preferably 30 minutes. An upper limit of the holding time for heat treatment is preferably 120 minutes, and more preferably 60 minutes. It is preferable that, after the holding time is over, the intermediate product is water cooled.

After heat treatment, it is preferable not to perform cold working because, if cold working is performed, it will be difficult to maintain the product in a predetermined size.

The above-described steps result in an austenite-based stainless steel pipe. In this manufacturing method, a push-bench process including two stages of heating is performed in at least one of a plurality of cycles of the push-bench step. Further, after the push-bench step, heat treatment is performed at 1140 to 1190 °C. This produces a microstructure with a recrystallization ratio $X$ not lower than 0.90 and an austenite crystal grain size of 20 to 300 $\mu$m.

An austenite-based stainless steel pipe according to one embodiment of the present invention has been described. The present embodiment provides an austenite-based stainless steel pipe with large diameter and large wall thickness that provides high creep strength, good SCC resistance and good SRC resistance.

EXAMPLES

The present invention will now be described more specifically with reference to examples. The present invention is not limited to these examples.

Steels having the chemical compositions shown in Table 1 were smelted to produce ingots. These ingots were subjected to piercing, the push-bench process and heat treatment under the conditions shown in Tables 2 and 3 to produce steel pipes with the sizes indicated in Table 2.

[Table 1]

TABLE 1

| Steel type | Chemical composition (in mass %, balance Fe and impurities) | | | | | | | | | | | | |
|---|---|---|---|---|---|---|---|---|---|---|---|---|---|
| | C | Si | Mn | P | S | Cu | Cr | Ni | Mo | N | Nb | B | sol. Al |
| A | 0.010 | 0.40 | 1.53 | 0.027 | 0.0005 | - | 17.09 | 11.21 | - | 0.084 | 0.36 | - | 0.007 |
| B | 0.002 | 0.29 | 1.40 | 0.027 | 0.0009 | - | 16.91 | 10.03 | 0.40 | 0.072 | 0.41 | - | <0.001 |
| C | 0.010 | 0.40 | 1.54 | 0.027 | 0.0005 | - | 17.09 | 9.88 | - | 0.083 | 0.32 | 0.0016 | 0.007 |
| D | 0.011 | 0.37 | 1.51 | 0.023 | 0.0010 | 0.07 | 18.21 | 11.51 | 0.40 | 0.081 | 0.31 | - | 0.007 |

[Table 2]

TABLE 2

| No. | Steel type | Outer diameter (mm) | Wall thickness (mm) | Heating temp. before piercing | Push bench | Heat treatment | Category |
|---|---|---|---|---|---|---|---|
| 1 | A | 790 | 43 | 1250 °C | HT1 | 1165 °C × 30 min | inv. ex. |
| 2 | B | 510 | 40 | 1250 °C | HT1 | 1165 °C × 30 min | inv. ex. |

(continued)

| No. | Steel type | Outer diameter (mm) | Wall thickness (mm) | Heating temp. before piercing | Push bench | Heat treatment | Category |
|---|---|---|---|---|---|---|---|
| 3 | C | 610 | 30 | 1250 °C | HT1 | 1165 °C × 30 min | inv. ex. |
| 4 | D | 540 | 38 | 1250 °C | HT1 | 1165 °C × 30 min | inv. ex. |
| 5 | B | 790 | 43 | 1250 °C | HT2 | 1165 °C × 30 min | comp. ex. |
| 6 | D | 508 | 27 | 1250 °C | HT3 | 1165 °C × 30 min | comp. ex. |
| 7 | A | 790 | 43 | 1250 °C | HT1 | 1120 °C × 30 min | comp. ex. |
| 8 | A | 790 | 43 | 1250 °C | HT1 | 1210 °C × 30 min | comp. ex. |

[Table 3]

TABLE 3

| | HT1 | HT2 | HT3 |
|---|---|---|---|
| Push-bench cycle 1 | 1250 °C (180 min) | 1250 °C (180 min) | 1250 °C (180 min) |
| Push-bench cycle 2 | 1200 °C (120 min) → 1150 °C (60 min) | 1150 °C (120 min) | 1200 °C (120 min) |
| Push-bench cycle 3 | 1200 °C (120 min) → 1150 °C (60 min) | 1150 °C (120 min) | 1200 °C (120 min) |
| Push-bench cycle 4 | 1200 °C (120 min) → 1150 °C (60 min) | 1150 °C (120 min) | 1200 °C (120 min) |
| Push-bench cycle 5 | 1200 °C (120 min) → 1150 °C (60 min) | 1150 °C (120 min) | 1200 °C (120 min) |
| Push-bench cycle 6 | 1200 °C (120 min) → 1150 °C (60 min) | 1150 °C (120 min) | 1200 °C (120 min) |

Table 3 summarizes heat patterns for the heating before push-bench process. The row "Push-bench cycle 1" in Table 3 lists the heat conditions before the first cycle of the push-bench process. The same applies, mutatis mutandis, to the rows "Push-bench cycle 2", "Push-bench cycle 3", and so on. In these rows, for example, "1250 °C (180 minutes)" means that the cup-shaped hollow shell was held at 1250 °C for 180 minutes before the push-bench process. As another example, "1200 °C (120 minutes) → 1150 °C (60 minutes)" means that the cup-shaped hollow shell was held at 1200 °C for 120 minutes and then held at 1150 °C for 60 minutes before the push-bench process. It is assumed that the recrystallization initiation temperature for these steel members was approximately 1000 °C.

For each of the steel pipes produced, a sample for microstructure observation was taken from a middle portion as determined along the wall-thickness direction, and the austenite crystal grain size $R$ and recrystallization ratio $X$ were measured. Further, creep rupture tests, tensile tests, SRC tests and SCC tests, described below, were conducted.

[Creep Rupture Testing]

Creep rupture tests in accordance with JIS Z 2271 were conducted. Specifically, a creep-rupture test specimen was heated to 650 °C, and a creep rupture test was then conducted. The testing stress was 200 MPa, and the creep rupture time was determined. The target creep rupture time was 300 hours or longer.

[Tensile Testing]

Room-temperature tensile tests were conducted. The target tensile strength $TS$ was 515 MPa or higher.

[SRC Testing]

Stress relaxation tests in accordance with ASTM E328 were conducted. The test conditions were as follows:

Pre-strain: 10 % at room temperature (strain rate: 2 mm/minute)
Temperature: 650 °C (temperature was raised for 4 hours and then held for 2 hours, followed by application of high-temperature strain)
Holding time: 1000 hours

After 1000 hours, for each test specimen that had not broken, scanning electron microscopy was used to observe the microstructure of a cut surface perpendicular to the longitudinal direction of the test specimen. The results of microstructure observation were evaluated, and a test specimen with no crack found on the grain boundaries and with no creep void found was classified as having "good" SRC resistance; a test specimen that had broken or had a crack on the grain boundaries or a creep void was classified as having "poor" SRC resistance.

[SCC Testing]

Sulfuric acid-copper sulfate corrosion tests in accordance with JIS G 0575 were conducted to evaluate grain-boundary corrosion resistance. After boiling testing, each test specimen was removed from the test solution; bending testing was performed and then the outer apex of the bent surface was observed by microscopy to investigate grain-boundary corrosion. The results of microscopic observations were evaluated, and a test specimen with no grain-boundary corrosion was classified as good, while a test specimen with grain-boundary corrosion was classified as "poor".

The results are shown in Table 4.

[Table 4]

TABLE 4

| No. | $R$ ($\mu$m) | $X$ | TS (MPa) | CR (hour) | SCC | SRC | Category |
|-----|------|------|----------|-----------|------|------|----------|
| 1 | 26 | 0.99 | 580 | 317.5 | good | good | inv. ex. |
| 2 | 70 | 0.94 | 551 | 456.6 | good | good | inv. ex. |
| 3 | 250 | 0.99 | 530 | 305.0 | good | good | inv. ex. |
| 4 | 241 | 0.99 | 528 | 314.4 | good | good | inv. ex. |
| 5 | 88 | 0.86 | 573 | 347.8 | good | poor | comp. ex. |
| 6 | 426 | 0.99 | 495 | 14.3 | good | good | comp. ex. |
| 7 | 88 | 0.67 | 624 | 375.0 | good | poor | comp. ex. |
| 8 | 339 | 0.99 | 520 | 29.5 | good | good | comp. ex. |
| CR: Rupture time in creep testing (650 °C, 200 MPa) | | | | | | | |

Each of the steel pipes labeled Test Nos. 1 to 4 had an austenite crystal grain size $R$ of 20 to 300 $\mu$m and a recrystallization ratio not lower than 0.90. These steel pipes had a high creep strength as well as a good SCC resistance and SRC resistance.

The steel pipe labeled Test No. 5 had a poor SRC resistance. This is presumably because of its low recrystallization ratio $X$. The recrystallization ratio $X$ was low presumably because sufficient processing strain was not applied during the push-bench step.

The steel pipe labeled Test No. 6 had a low creep strength. This is presumably because the austenite crystal grain size $R$ was too large. The austenite crystal grain size $R$ was large presumably because the crystal grains coarsened during the push-bench step.

The steel pipe labeled Test No. 7 had a poor SRC resistance. This is presumably because the recrystallization ratio $X$ was low. The recrystallization ratio $X$ was low presumably because the heating temperature for the heat treatment step was too low.

The steel pipe labeled Test No. 8 had a low creep strength. This is presumably because the austenite crystal grain size $R$ was too large. The austenite crystal grain size $R$ was large presumably because the heating temperature for the heat treatment step was too high.

Although embodiments of the present invention have been described, the above-described embodiments are merely illustrative examples useful for carrying out the present invention. Thus, the present invention is not limited to the above-described embodiments, and the above-described embodiments, when carried out, may be modified as appropriate within the scope of the invention.

**Claims**

1. An austenite-based stainless steel pipe having a chemical composition of, in mass %:

   up to 0.030 % C;
   0.10 to 1.00 % Si;
   0.10 to 2.00 % Mn;
   15.00 to 25.00 % Cr;
   6.00 to 15.00 % Ni;
   0.020 to 0.200 % N;
   up to 0.030 % sol. Al;
   0.001 to 0.045 % P;
   up to 0.010 % S;
   0.20 to 1.00 % Nb;
   0 to 2.00 % Mo;
   0 to 2.50 % Cu;
   0 to 0.0050 % B; and
   balance Fe and impurities,
   an outer diameter being not smaller than 200 mm,
   a wall thickness being not smaller than 15 mm,
   an austenite crystal grain size being 20 to 300 $\mu$m,
   a recrystallization ratio $X$ being not lower than 0.90,
   wherein the recrystallization ratio $X$ is measured by: taking a sample from a middle portion, as determined along a wall-thickness direction, of the austenite-based stainless steel pipe; conducting an electron backscatter measurement in a grid with a scan spacing not larger than 2.0 $\mu$m, where a region not smaller than 10.0 mm$^2$ of a cut surface perpendicular to a pipe-axis direction is measured; and classifying those of crystal grains within the measured region which have a GOS value not less than 1.0° as non-recrystallized grains and those with a GOS value less than 1.0° as recrystallized grains, where the defining angle for a crystal grain boundary is 4.0° and the recrystallization ratio $X$ is defined as the ratio of the area of the recrystallized grains $S_R$ to the area of the measured region $S$, $S_R/S$.

2. The austenite-based stainless steel pipe according to claim 1, wherein the chemical composition includes one or more selected from the group consisting of, in mass %:

   0.05 to 2.00 % Mo;
   0.05 to 2.50 % Cu; and
   0.0005 to 0.0050 % B.

3. The austenite-based stainless steel pipe according to claim 1 or 2, wherein the austenite-based stainless steel pipe is a seamless steel pipe.

4. A method of manufacturing the austenite-based stainless steel pipe according to claim 3, comprising:

   piercing a steel material to produce a cup-shaped hollow shell;
   subjecting the cup-shaped hollow shell to a push-bench process in a plurality of cycles to produce an intermediate product; and
   heat treating the intermediate product at 1140 to 1190 °C,
   wherein, in at least one of the plurality of cycles of the push-bench process to produce the intermediate product, the cup-shaped hollow shell is held at a predetermined heating temperature $T1$ for a predetermined period of time and then held at a heating temperature $T2$ lower than the heating temperature $T1$ for a predetermined period of time before the push-bench process.

Fig.1

Fig.2

Fig.3

400μm

Fig.4

*Fig.5*

```
        ┌──────────────┐
        │    Start     │
        └──────┬───────┘
               ↓
        ┌──────────────┐
        │   Piercing   │──── S1
        └──────┬───────┘
               ↓
     ┌───────────────────┐
     │ Push-bench cycle 1│──── S2-1
     └─────────┬─────────┘
               ↓
     ┌───────────────────┐
     │ Push-bench cycle 2│──── S2-2
     └─────────┬─────────┘
               ┊
               ↓
     ┌───────────────────┐
     │ Push-bench cycle n│──── S2-n
     └─────────┬─────────┘
               ↓
     ┌───────────────────┐
     │  Heat treatment   │──── S3
     └─────────┬─────────┘
               ↓
        ┌──────────────┐
        │     End      │
        └──────────────┘
```

*Fig.6*

## INTERNATIONAL SEARCH REPORT

| International application No. |
| --- |
| **PCT/JP2023/045030** |

| A. | CLASSIFICATION OF SUBJECT MATTER |
| --- | --- |

*C22C 38/00*(2006.01)i; *C21D 8/10*(2006.01)i; *C22C 38/58*(2006.01)i
FI:   C22C38/00 302Z; C22C38/58; C21D8/10 D

According to International Patent Classification (IPC) or to both national classification and IPC

| B. | FIELDS SEARCHED |
| --- | --- |

Minimum documentation searched (classification system followed by classification symbols)

C22C38/00-38/60; C21D8/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115341143 A (JIANGSU WUJIN STAINLESS STEEL PIPE GROUP CO., LTD.) 15 November 2022 (2022-11-15)<br>    entire text | 1-4 |
| A | CN 109504830 A (CENTRAL SOUTH UNIVERSITY) 22 March 2019 (2019-03-22)<br>    entire text | 1-4 |
| A | CN 109504921 A (CENTRAL SOUTH UNIVERSITY) 22 March 2019 (2019-03-22)<br>    entire text | 1-4 |
| A | CN 109504833 A (CENTRAL SOUTH UNIVERSITY) 22 March 2019 (2019-03-22)<br>    entire text | 1-4 |
| A | JP 2003-268503 A (SUMITOMO METAL INDUSTRIES, LTD.) 25 September 2003 (2003-09-25)<br>    entire text | 1-4 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 February 2024** | **27 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2023/045030** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2021/141107 A1 (NIPPON STEEL CORPORATION) 15 July 2021 (2021-07-15)<br>entire text | 1-4 |
| A | WO 2018/043565 A1 (NIPPON STEEL & SUMITOMO METAL CORPORATION) 08 March 2018 (2018-03-08)<br>entire text | 1-4 |

Form PCT/ISA/210 (second sheet) (July 2022)

## INTERNATIONAL SEARCH REPORT
### Information on patent family members

| International application No. |
| --- |
| **PCT/JP2023/045030** |

| Patent document cited in search report | | | Publication date (day/month/year) | Patent family member(s) | | | Publication date (day/month/year) |
| --- | --- | --- | --- | --- | --- | --- | --- |
| CN | 115341143 | A | 15 November 2022 | (Family: none) | | | |
| CN | 109504830 | A | 22 March 2019 | (Family: none) | | | |
| CN | 109504921 | A | 22 March 2019 | (Family: none) | | | |
| CN | 109504833 | A | 22 March 2019 | (Family: none) | | | |
| JP | 2003-268503 | A | 25 September 2003 | US entire text | 2003/0231976 | A1 | |
| | | | | EP | 1342807 | A2 | |
| | | | | CN | 1443867 | A | |
| | | | | KR | 10-0519262 | B1 | |
| | | | | CA | 2420796 | A1 | |
| WO | 2021/141107 | A1 | 15 July 2021 | US entire text | 2022/0411908 | A1 | |
| | | | | EP | 4089195 | A1 | |
| | | | | CN | 114929917 | A | |
| | | | | KR | 10-2022-0124238 | A | |
| WO | 2018/043565 | A1 | 08 March 2018 | US entire text | 2019/0194787 | A1 | |
| | | | | EP | 3508602 | A1 | |
| | | | | CN | 109642291 | A | |
| | | | | KR | 10-2019-0042675 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KUDO, TAKEO et al.** Development of 347AP Stainless Steel with High Polythionic Acid SCC Resistance for Furnace Tubes. *Sumitomo Metals*, 1986, vol. 38 (3), 190